# FASCICULE DE BREVET EUROPEEN

(11) **EP 1 559 516 B1**
(45) Date de publication et mention de la délivrance du brevet: **28.03.2007**
(21) Numéro de dépôt: 05300054.3
(22) Date de dépôt: 24.01.2005
(51) Int. Cl.: B25D 17/08, B25D 17/20, B28D 1/14, B23Q 3/12, B23Q 11/12, B23B 31/107, B23B 51/06

(54) **Dispositif de forage notamment a pointe diamant avec refroidissement integré**
Bohrvorrichtung, insbesondere mit Diamantkopf und integrierter Kühlung
Drilling device, in particular having a diamond head with integrated cooling

(30) Priorité: 29.01.2004 FR 0401028
(43) Date de publication de la demande: 03.08.2005
(73) Titulaire: M.B.H. Developpement, 42120 St. Vincent de Boisset (FR)
(72) Inventeur: Bottazzi, Marc, 42120 Saint Vincent de Boisset (FR)
(74) Mandataire: Dupuis, François

(56) Documents cités:
- DE-A- 19 626 254
- DE-U- 20 016 941
- US-A- 5 199 833
- PATENT ABSTRACTS OF JAPAN vol. 0141, no. 19 (M-0945), 6 mars 1990 (1990-03-06) & JP 01 316109 A (HITACHI KOKI CO LTD), 21 décembre 1989 (1989-12-21)

## Description

L'invention se rattache au secteur technique des forets à pointe diamant, carbures ou similaires utilisés pour le perçage dans des matériaux durs du type béton, céramique, pierres de façade et similaires, marbres et granites (voir DE 20016941 U).

Selon l'art antérieur, on connaît des unités de forage autonome présentant des forets à pointe diamantée carbures et similaires faisant intervenir à partir d'un portique support d'une machine électroportative du type perceuse, l'adjonction d'un équipement permettant une distribution de fluide de refroidissement. Ce type d'unité de forage nécessite un raccordement à un dispositif d'alimentation en fluide par des canalisations et conduits qui sont extérieurs à la machine électroportative et exigeant des moyens de protection de celle-ci. La diffusion du fluide de refroidissement s'effectue en introduisant le fluide refroidissant dans le corps creux intérieur du foret, et un récupérateur de fluide est alors disposé en regard du foret avec un dispositif d'aspiration. Ceci est nécessaire par suite des quantités de fluide projeté. L'alimentation en liquide de refroidissement en eau par exemple requiert l'utilisation d'une pompe autonome avec une certaine réserve en quantité d'eau, ou un branchement à un circuit de distribution d'eau.

Une telle unité de forage est donc complexe et coûteuse et pas toujours facile à transporter. Par ailleurs, il est difficile de réguler le volume du fluide distribué pouvant entraîner une inadaptation du volume du fluide de refroidissement distribué par rapport aux besoins et aux perçages effectués.

A partir de ce constat et connaissant parfaitement les unités de forage rappelées précédemment, étant amené à les commercialiser, la démarche du demandeur a donc été de réfléchir à la recherche d'un nouveau concept de distribution du fluide de refroidissement sur ou à travers un foret à pointe diamant, carbures ou similaires, afin de simplifier la mise en oeuvre des unités de forage du type précité, en facilitant le transport et en réduisant les coûts, et en répondant d'une manière simple aux exigences des quantités et volumes de fluides de refroidissement à distribuer, en fonction des paramètres des forages à exécuter.

Ainsi, à partir de cette démarche, le demandeur a imaginé un dispositif de forage à pointe diamant avec refroidissement intégré, lequel a fait l'objet de la demande de brevet FR 0308749. Selon cette invention, le dispositif de forage à pointe diamant, carbures ou similaires, pouvant être intégré dans une unité de forage autonome comprend un foret (1) réalisé et présentant un corps creux dont la partie avant se prolonge par une tête tubulaire (1a) de moindre diamètre et de grande longueur dont l'extrémité débordante est agencée pour recevoir la partie active (2) de forage diamantée. Ledit foret reçoit une cartouche (3) remplie d'un fluide de refroidissement présentant une forme en poche introduite dans le corps dudit foret et venant en appui sur la partie siège intérieur de celui-ci. Ladite poche présente un appendice (3a) longitudinal introduit dans la tête tubulaire du foret et étant sensiblement en débordement ou non de la partie active diamantée. Le foret reçoit, à l'arrière et à l'intérieur de son corps, un moyen presseur (4) porte-foret susceptible d'appliquer une force de compression sur la poche et permettant, après déchirure, le vidage complet du fluide de refroidissement contenu.

La mise en oeuvre de ce dispositif de forage répond parfaitement au problème posé. Cependant, sa mise en oeuvre industrielle reste coûteuse à réaliser.

Ainsi, la démarche du demandeur a été d'optimiser la mise en oeuvre décrite dans la demande de brevet précitée, en reconsidérant la conception du dispositif.

Une autre démarche du demandeur a été aussi de rechercher et de concevoir des moyens du dispositif de forage permettant une certaine standardisation pour la réception du foret de caractéristiques variables, et un changement rapide du foret.

La nouvelle solution apportée par le demandeur répond aux problèmes posés pour une mise en oeuvre industrielle de l'invention dans des conditions optimisées.

Selon une première caractéristique de l'invention, le dispositif de forage, notamment à pointe diamant avec refroidissement intégré, est remarquable en ce qu'il comprend un manchon épaulé agencé pour être engagé et centré dans un porte-outil tubulaire dont l'extrémité arrière est insérée dans les mâchoires d'un mandrin de machine, et recevant, à montage et démontage rapide, un foret à pointe diamant et creux intérieurement, ledit porte-outil recevant, dans son fond, une poche remplie d'un liquide de refroidissement, mise en pression progressive par le manchon, et en ce que ledit manchon est agencé pour recevoir à débattement longitudinal limité et contrôlé, une bague sollicitée à l'encontre d'un moyen de rappel élastique, et en ce que le manchon et le porte-outil sont agencés avec des empreintes autorisant le positionnement des billes escamotables sous l'action de poussée de la bague et autorisant le verrouillage/déverrouillage rapide du foret, le liquide traversant l'ensemble ainsi monté.

Ces caractéristiques et d'autres encore ressortiront bien de la suite de la description.

Pour fixer l'objet de l'invention illustré d'une manière non limitative aux figures des dessins où :
- La figure 1 est une vue d'ensemble du dispositif de forage, objet de la demande de brevet FR 0308749 du demandeur, avant assujettissement du foret sur le porte-foret,

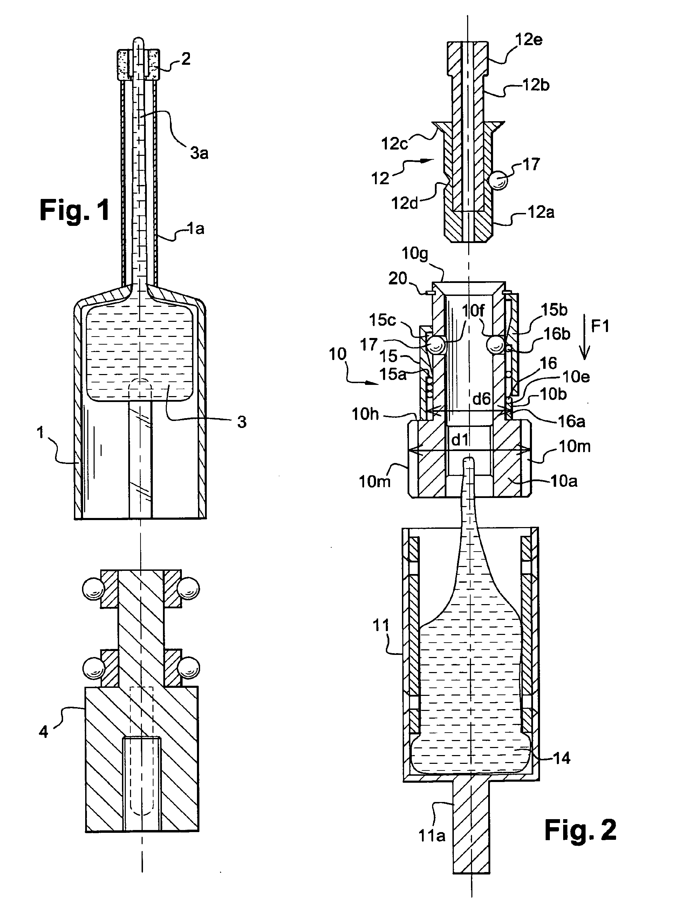

- La figure 2 est une vue d'ensemble du dispositif de forage, selon l'invention, avant montage de ces éléments, le manchon récepteur du foret étant représenté en deux demi-vues avec, en particulier, le positionnement de la bague par rapport au positionnement du foret,

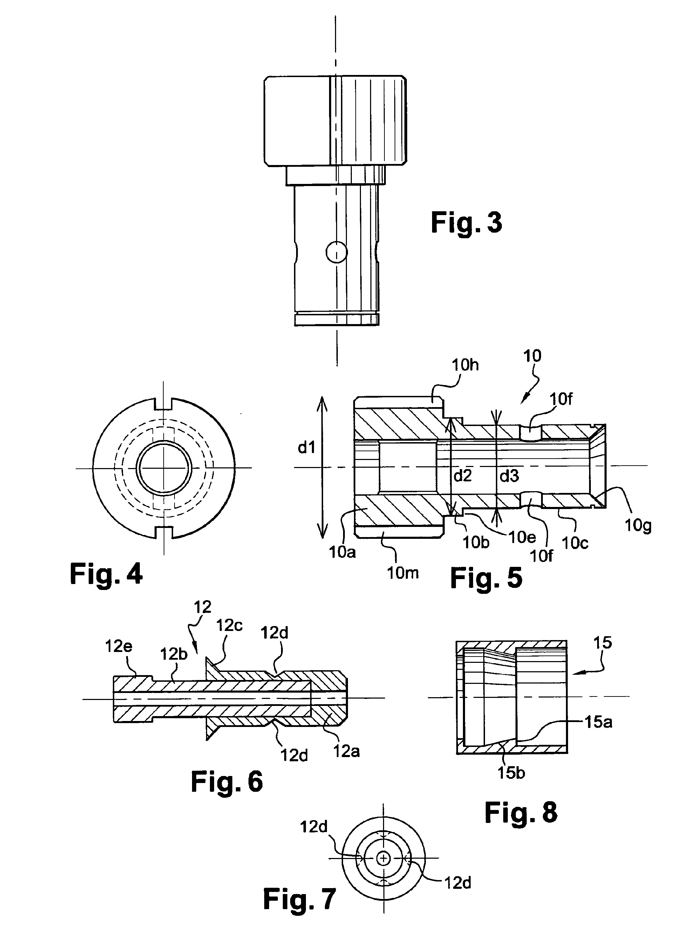

- La figure 3 est une vue de profil du manchon,
- La figure 4 est une vue de dessus du manchon, selon la figure 3,
- La figure 5 est une vue en coupe longitudinale du manchon,
- La figure 6 est une vue en coupe longitudinale du foret,
- La figure 7 est une vue de face du foret,
- La figure 8 est une vue en coupe transversale de la bague.

Afin de rendre plus concret l'objet de l'invention, on le décrit maintenant d'une manière non limitative illustrée aux figures des dessins.

Le dispositif de forage, notamment à pointe diamant avec refroidissement intégré, est remarquable en ce qu'il comprend un manchon épaulé (10) agencé, d'une part, pour être engagé et centré dans un porte-outil (11) tubulaire dont l'extrémité arrière (11a) cylindrique débordante peut être insérée dans les mâchoires d'un mandrin de machine du type perceuse et, d'autre part, pour recevoir, à montage et démontage rapide, un foret (12) à pointe diamant, et ce pour autoriser un changement d'outil rapide en fonction des besoins. Le foret pris dans son ensemble est monobloc ou en deux parties solidarisées entre elles, ainsi qu'il sera précisé dans la suite de la description. On désignera par le terme « foret », l'une et l'autre réalisation qui mettent en oeuvre également l'invention. Ledit porte-outil (11) est susceptible de recevoir, dans son fond, une poche (14) remplie d'un liquide de refroidissement, selon un volume ou dose pré-établi mise en pression progressive par le manchon, ladite poche présentant une canule ou appendice (14a) de grande longueur traversant ledit manchon et le foret pour aboutir à l'extrémité de la partie interne du foret. En variante, ladite canule est associée à une seringue qui peut déborder de la partie active du foret. Le manchon épaulé (10) comprend successivement une portée cylindrique (10a) de grand diamètre (d1) pour s'engager à ajustement dans le porte-outil et présente, au moins, deux rainures de guidage (10m) longitudinales et diamétralement opposées pour s'insérer dans des cannelures ou barres (11a) disposées intérieurement dans le porte-outil. Ces cannelures (11a) sont usinées ou rapportées à l'intérieur du porte-outil et maintenues par collage, vissage ou autrement. Le déplacement ou guidage du manchon à l'intérieur du porte-outil reste limité du fait de la position intérieure de la poche (14) remplie du liquide de refroidissement qui reste incompressible dans une certaine mesure après évacuation du liquide. Le manchon présente, au-delà de sa portée (10a), une seconde portée (10b) de petite longueur et de diamètre (d2) inférieure au diamètre (d1) de la première portée, puis une troisième portée (10c) de grande longueur et de diamètre (d3) inférieur au diamètre (d2). Ledit manchon est ainsi susceptible de recevoir une bague (15) coulissante longitudinalement à l'encontre d'un ressort de rappel (16) monté autour de la portée (10c). Ce ressort vient par une extrémité (16a) en butée de position sur le chant (10e) de jonction entre les portées (10b - 10c), et l'autre extrémité (16b) vient en appui contre un chant intermédiaire (15a) adjacent à une rampe (15b) formée dans la partie interne de la bague (15). Celle-ci est limitée en position par un circlips (20) monté sur la portée (10c) près de l'extrémité de celle-ci, en faisant office de butée d'arrêt avant de la bague. Ladite bague peut donc s'escamoter et recouvrir la portée (10b) et venir en butée contre le chant de jonction (10h) entre la première et seconde portée, et ce à l'encontre de la compression du ressort, cela dans la phase de mise en place du porte-foret. Le manchon (10) présente, en outre, sur sa portée cylindrique (10c), et dans son épaisseur, quatre logements (10f) récepteur de billes (17) de verrouillage, lesdites billes étant escamotables dans leur logement en fonction de la position de la bague (15). Celle-ci présente, à cet effet, intérieurement, un profil (15b) formant rampe orientée inclinée à partir de l'avant de la bague et établi sur le pourtour périphérique intérieur de la bague. Cette rampe est en contact avec les billes en regard et selon la position de la bague provoquant son échappement. En situation où la bague (15) n'est pas sollicitée, et correspondant à la situation de détente du ressort (16), lesdites rampes appuient sur les billes qui débordent intérieurement dans l'alésage du manchon. En situation de sollicitation de la bague, selon la flèche (F1), et ce pour permettre le chargement ou l'enlèvement du foret, la partie rampe s'escamote et les billes sont déplacées radialement pour venir partiellement, sous l'action de déplacement du foret, dans la cavité formée (15c) à l'avant de la bague (15). Le manchon (10) présente, sur sa face avant, une entrée conique (10g) formant siège du foret. Plus particulièrement, le foret (12) est agencé pour permettre son montage et démontage rapide par rapport au manchon et au porte-outil, afin d'assurer les changements nécessaires de foret. Le foret (12) présente un corps cylindrique (12a), creux intérieurement, pour le passage de l'extrémité de la poche remplie de fluide ou d'une forme en seringue disposée en extrémité de l'appendice de la poche. Le foret présente une partie tubulaire (12b) et, à son extrémité, la partie active du forage (12e) qui est de tout type approprié, tel que celle décrite dans le brevet FR 0308749. Le foret présente une tête (12c) évasée susceptible de venir en appui et centrage dans la partie avant dudit manchon. En outre, la partie arrière du corps du foret présente, sur sa périphérie, quatre empreintes (12d) établies dans son épaisseur de configurations coniques et autorisant l'insertion des billes disposées à partir du manchon. Le foret est ainsi monobloc en formant un tout. En variante, la partie recevant en bout l'extrémité active (12b) peut être soudée par ultrasons ou autrement à la partie corps. On comprend ainsi que le foret, par son agencement et montage, est auto-verrouillé en position dans le manchon, seul le dégagement de la bague (15) autorise la libération des billes et l'enlèvement et la mise en place du foret.

La mise en oeuvre de l'invention est avantageuse dans sa réalisation avec des composants de fabrication aisée, de montage simple et permettant un montage et démontage rapide du porte-foret en vue du changement de foret.

On peut donc concevoir aussi, à partir d'un seul sous-ensemble porte-outil, manchon, une pluralité de forets à la manière d'une gamme.

## Revendications

1. Dispositif de forage, notamment à pointe diamant avec refroidissement intégré, **caractérisé en ce qu**'il comprend un manchon épaulé (10) agencé pour être engagé et centré dans un porte-outil (11) tubulaire dont l'extrémité arrière (11a) est insérée dans les mâchoires d'un mandrin de machine, et recevant, à montage et démontage rapide, un foret (12) à pointe diamant et creux intérieurement, ledit porte-outil (11) recevant, dans son fond, une poche (14) remplie d'un liquide de refroidissement, mise en pression progressive par le manchon (10),
**et en ce que** ledit manchon est agencé pour recevoir, à débattement longitudinal limité et contrôlé, une bague (15) sollicitée à l'encontre d'un moyen de rappel élastique,
**et en ce que** le manchon et le porte-outil sont agencés avec des empreintes autorisant le positionnement des billes (17) escamotables sous l'action de poussée de la bague et autorisant le verrouillage/déverrouillage rapide du foret, le liquide traversant l'ensemble ainsi monté.

2. Dispositif de forage, selon la revendication 1, **caractérisé en ce que** le manchon épaulé (10) comprend successivement une portée cylindrique (10a) de grand diamètre (d1) pour s'engager à ajustement dans le porte-outil, une seconde portée (10b) de petite longueur et de diamètre (d2) inférieure au diamètre (d1), puis une troisième portée (10c) de grande longueur et de diamètre (d3) inférieur au diamètre (d2), ledit manchon recevant une bague (15) coulissante longitudinalement à l'encontre d'un ressort de rappel (16) monté autour de la portée (10c), ledit ressort venant en appui contre un chant intermédiaire (15a) adjacent à une rampe (15b) formée dans la partie interne de la bague et contre le chant (10e) entre la seconde et la troisième portée,
**et en ce que** la bague est agencée avec un profil interne ou rampe (15a) venant en appui sur les billes (17) disposées dans les ouvertures et empreintes établies sur le foret et la troisième portée du manchon.

3. Dispositif de forage, selon la revendication 2, **caractérisé en ce que** la portée (10a) de grand diamètre du manchon présente au moins deux rainures de guidage (10m) longitudinales et diamétralement opposées pour s'insérer dans des cannelures ou barres (11a) disposées intérieurement et fixées dans le porte-outil.

4. Dispositif de forage, selon la revendication 2, **caractérisé en ce qu'**un circlips (20) est monté sur la portée (10c) du manchon près de son extrémité et fait office de butée avant de la bague.

5. Dispositif de forage, selon la revendication 2, **caractérisé en ce que** le manchon (10) est creux intérieurement et autorise le passage de l'appendice (14a) formé sur la poche (14) contenant le liquide de refroidissement, ledit appendice traversant également le foret.

6. Dispositif de forage, selon la revendication 5, **caractérisé en ce que** l'extrémité de l'appendice (14a) de la poche reçoit une seringue débordante dans la partie active du foret.

7. Dispositif de forage, selon l'une quelconque des revendications 1 et 2, **caractérisé en ce que** le foret est monobloc et comprend un corps cylindrique (12a) se prolongeant par une partie tubulaire (12b) avec, à son extrémité, la partie active (12e) de forage et une tête (12c) évasée en appui et centrage dans la partie avant du manchon,
**et en ce que** le corps présente des empreintes (12d) formant logement des billes (17).

## Claims

1. - A drilling device, especially one with a diamond tip and integral cooling, **characterised in that** it comprises a shouldered sleeve (10) designed to be fitted and centred in a tubular tool holder (11), the rear end (11 a) of which is inserted into the jaws of a machine chuck and receiving an internally hollow quick-lock/unlock drill bit (12) with a diamond tip, said tool holder (11) accommodating, in its bottom, a pocket (14) filled with a coolant that is gradually pressurised by sleeve (10),
**and in that** said sleeve is designed to accommodate, with limited and controlled longitudinal travel, a ring (15) that is pressed against an elastic return means,
**and in that** the sleeve and tool holder are devised with indentations allowing positioning of ball bearings (17) which can retract due to the thrust of the ring and allowing fast locking/unlocking of the drill bit, the coolant flowing through the assembly thus obtained.

2. - A drilling device as claimed in claim 1, **characterised in that** shouldered sleeve (10) successively comprises a large-diameter (d1) cylindrical bearing surface (10a) to adjustably fit in the tool holder, a second small-diameter (d2) bearing surface (10b) having a diameter less than diameter (d1), then a third long bearing surface (10c) having a diameter (d3) less than diameter (d2), said sleeve accommodating a ring (15) that slides longitudinally in opposition to a return spring (16) fitted around bearing surface (10c), said spring pushing against an intermediate edge (15a) adjacent to a ramp (15b) formed in the internal part of the ring and against edge (10e) between the second and third bearing surface,
**and in that** the ring is designed with an internal profile or ramp (15a) that presses against ball bearings (17) located in the openings and cavities on the drill bit and the third bearing surface of the sleeve.

3. - A drilling device as claimed in claim 2, **characterised in that** large-diameter bearing surface (10a) of the sleeve has at least two diametrically-opposite longitudinal guide grooves (10m) in order to fit onto the splines or bars (11a) located internally and fixed in the tool holder.

4. - A drilling device as claimed in claim 2, **characterised in that** a circlip (20) is fitted on bearing surface (10c) of the sleeve close to its end and acts as a front limit stop for the ring.

5. - A drilling device as claimed in claim 2, **characterised in that** sleeve (10) is internally hollow and provides room for tail (14a) formed on pocket (14) containing coolant, said tail also passing through the drill bit.

6. - A drilling device as claimed in claim 5, **characterised in that** the end of the tail (14a) of the pocket receives a protruding syringe in the active part of the drill bit.

7. - A drilling device as claimed in any of claims 1 and 2, **characterised in that** the drill bit is of one piece construction and comprises a cylindrical body (12a) that extends as a tubular part (12b) with, at its end, the active drilling part (12e) and a flared head (12c) pushed against and centred in the front part of the sleeve,
**and in that** the body has indentations (12d) forming a recess for ball bearings (17).

## Patentansprüche

1. Bohrvorrichtung, insbesondere mit Diamantkopf und integrierter Kühlung, **dadurch gekennzeichnet, dass** sie einen angesetzten Stutzen (10) aufweist, der so angeordnet ist, dass er in einen rohrförmigen Werkzeughalter (11) eingreift und darin zentriert ist, dessen hinteres Ende (11a) in die Spannbacken eines Maschinendorns eingeschoben wird, und bei rascher Montage und Demontage einen Bohrer (12) mit Diamantkopf aufnimmt, der innen hohl ist, wobei der Werkzeughalter (11) an seinem Boden eine Tasche (14) aufnimmt, die mit Kühlflüssigkeit gefüllt ist, welche durch den Stutzen (10) nach und nach unter Druck gesetzt wird,
und **dadurch gekennzeichnet, dass** der Stutzen derart angeordnet ist, dass er einen Ring (15) mit längsverlaufendem begrenztem und kontrolliertem Ausschlag aufnimmt, der gegenüber einem elastischen Rückholelement gespannt ist,
und **dadurch gekennzeichnet, dass** der Stutzen und der Werkzeughalter mit Vertiefungen angeordnet sind, die unter dem Druck des Ringes die Positionierung von versenkbaren Kugeln (17) sowie die rasche Verriegelung / Entriegelung des Bohrers ermöglichen, wobei die Flüssigkeit durch die auf diese Art und Weise montierte Vorrichtung läuft.

2. Bohrvorrichtung nach Anspruch 1, **dadurch gekennzeichnet, dass** der angesetzte Stutzen (10) nacheinander eine zylindrische Auflagefläche (10a) mit großem Durchmesser (d1) aufweist, die mit Passung in den Werkzeughalter eingreift, eine zweite, kurze Auflagefläche (10b) mit einem geringeren Durchmesser (d2) als Durchmesser (d1) aufweist, sowie eine dritte, lange Auflagefläche (10c) mit geringerem Durchmesser (d3) als Durchmesser (d2) aufweist, wobei der Stutzen einen Ring (15) aufnimmt, der längs zu einer Rückholfeder (16) verschiebbar ist, die um die Auflagefläche (10c) herum montiert wurde, wobei sich die Feder gegen eine Zwischenkante (15a) abstützt, die an eine geneigte Ebene (15b) angrenzt, welche in dem inneren Teil des Ringes gebildet wird, und gegen die Kante (10e) zwischen der zweiten und dritten Auflagefläche,
und **dadurch gekennzeichnet, dass** der Ring mit einem inneren Profil oder einer geneigten Fläche (15a) angeordnet ist, die sich auf den Kugeln (17) abstützt, welche in den Öffnungen und Vertiefungen angeordnet sind, die sich an dem Bohrer und an der dritten Auflagefläche des Stutzens befinden.

3. Bohrvorrichtung nach Anspruch 2, **dadurch gekennzeichnet, dass** die Auflagefläche (10a) des Stutzens mit großem Durchmesser mindestens zwei längsverlaufende und diametral einander gegenüberliegende Führungsrillen (10m) aufweist, die in Hohlkehlen oder Stäbe (11a) eingeschoben werden, welche im Inneren angeordnet und in dem Werkzeughalter befestigt sind.

4. Bohrvorrichtung nach Anspruch 2, **dadurch gekennzeichnet, dass** ein Sicherungsring (20) an der Auflagefläche (10c) des Stutzens in der Nähe seines Endes montiert ist, der als vorderer Anschlag des Ringes dient.

5. Bohrvorrichtung nach Anspruch 2, **dadurch gekennzeichnet, dass** der Stutzen (10) in seinem Inneren hohl ist, und den Durchgang des Verlängerungsstückes (14a) erlaubt, das an der Tasche (14) gebildet wird, die die Kühlflüssigkeit enthält, wobei das Verlängerungsstück ebenfalls durch den Bohrer verläuft.

6. Bohrvorrichtung nach Anspruch 5, **dadurch gekennzeichnet, dass** das Ende des Verlängerungstückes (14a) der Tasche eine Spritze aufnimmt, die in dem aktiven Teil des Bohrers vorsteht.

7. Bohrvorrichtung nach einem der Ansprüche 1 und 2, **dadurch gekennzeichnet, dass** der Bohrer aus einem Stück besteht und ein zylinderförmiges Gehäuse (12a) aufweist, das sich in einem rohrförmigen Abschnitt (12b) fortsetzt, wobei sich an seinem Ende der aktive Bohrabschnitt (12e) und ein aufgeweiteter Kopf (12c) abstützen und in dem vorderen Teil des Stutzens zentriert sind,
und **dadurch gekennzeichnet, dass** das Gehäuse Vertiefungen (12d) aufweist, in denen Kugeln (17) gelagert sind.
